# EUROPEAN PATENT APPLICATION

(11) **EP 3 854 631 A1**
(43) Date of publication of application: **28.07.2021**
(21) Application number: 20213377.3
(22) Date of filing: 11.12.2020
(51) Int. Cl.: B60N 2/40

(54) **A SEAT ASSEMBLY**

(30) Priority: 25.01.2020 IN 202041003445
(71) Applicant: TVS Motor Company Limited, Chennai 600006 (IN)
(72) Inventor: MANGA RAJU, Karnam Venkata, 600 006 Chennai (IN); RAJAMANI, Ravisankar, 600 006 Chennai (IN); GARG, Manish, 600 006 Chennai (IN); PRAVEEN, Velagapudi Sai, 600 006 Chennai (IN); KOTHANDAPANI, Mohan, 600 006 Chennai (IN); BASHA JEELANI, Shathick, 600 006 Chennai (IN); MAHARANA, Monalisha, 600 006 Chennai (IN)
(74) Representative: Patentanwaltskanzlei Matschnig & Forsthuber OG

(57) **Abstract**

The present invention relates to a seat assembly **(130)** comprising of a seat heating-cooling device **(300)** sandwiched between the seat cover **(130C)** and foam member **(130B).** The seat heating-cooling device **(300)** is positioned at a pre-determined distance X from the seat start point **SS** of the seat assembly **(130).** Further, as per the present invention, the distance between two consecutive rows of the seat heating-cooling device **(300)** is at a pre-determined distance **Y** along the width of the seat assembly **(130)** of the vehicle **(100).**

## Description

### FIELD OF INVENTION

The present subject matter relates generally to a motor vehicle and more particularly, but not exclusively to a seat assembly for motor vehicles.

### BACKGROUND OF INVENTION

Generally, in a two-wheeled vehicle with a step-through type frame assembly, a floorboard is provided at a step-through space. A user rests his feet on the floorboard, which enables him to have a seating posture, while driving. A seat assembly is disposed in a posterior portion of the step-through space. The seat assembly comprises a rider seat and a passenger seat. A passenger grip is provided on a rear portion of the seat assembly. The passenger grip enables the pillion rider to get support. Generally, in a vehicle with a step-through type frame assembly, a utility box is disposed below the seat assembly. The seat assembly, in an open condition, provides access to the utility box. Further, the seat assembly has a cushion material for comfortable ride. Also, the seat assembly provides an aesthetic look to the vehicle.

### BRIEF DESCRIPTION OF DRAWINGS

The detailed description is described with reference to the accompanying figures. In the figures, the left-most digit(s) of a reference number identifies the figure in which the reference number first appears. The same numbers are used throughout the drawings to reference like features and components.
**Figure 1** illustrates a side view of an exemplary two-wheeled vehicle, in accordance with an embodiment of the present subject matter.
**Figure 2** illustrates an exploded view of a seat assembly, in accordance with an embodiment of the present subject matter.
**Figure 3 (a)** illustrates a perspective view of a seat assembly, in accordance with an embodiment of the present subject matter.
**Figure 3 (b)** illustrates an exploded view of a seat assembly, in accordance with an embodiment of the present subject matter.
**Figure 3 (c)** illustrates a side view of a seat assembly with a cut out section showing the internal view of a seat assembly with a seat heating-cooling device, in accordance with an embodiment of the present subject matter.
**Figure 3 (d)** illustrates a side view of a seat assembly with a cut out section showing the internal view of a seat assembly with a seat heating-cooling device, in accordance with an embodiment of the present subject matter.
**Figure 4** illustrates a graphical representation of seat pressure distribution along the length of a seat assembly, in accordance with an embodiment of the present subject matter.
**Figure 5** illustrates a graphical representation of seat pressure distribution along the width of the seat assembly, in accordance with an embodiment of the present subject matter.
**Figure 6** illustrates a graphical representation of temperature over the period of time with reference to a seat heating-cooling device position in a seat assembly, in accordance with an embodiment of the present subject matter.
**Figure 7** illustrates a side view of an exemplary two-wheeled vehicle with riders, in accordance with an embodiment of the present subject matter.

### DETAILED DESCRIPTION

Generally, in a vehicle frame assembly, the seat assembly is provided with a cushion material to provide comfortable ride to the rider and the passenger. Further, the seat assembly provides access and secures the utility box. In some vehicles, a fuel tank opening is provided below the seat assembly. Furthermore, a pillion handle is provided which has a pair of passenger grips that are disposed adjacent to the seat assembly and extending rearwardly of the seat assembly that are mounted to the frame assembly. Also, the seat locking mechanism is provided rearwardly below the seat assembly to secure the seat assembly to the frame assembly.

Conventionally, a vehicle layout design for a vehicle features a frame assembly. A front end of the frame assembly includes a head tube configured to support a handlebar assembly for the purpose of steering the vehicle. A seat assembly is disposed rearwardly to the handlebar assembly. The seat assembly is meant for being seated by a rider and the pillion rider. The seat assembly for the rider and the pillion on a two-wheeled vehicle is typically enclosed by a cover. The cover is typically made up of a protective, comfortable contact interface & durable leather material. The cover acts as a protective covering member for a seat cushion disposed beneath the resin cover. The seat cushion is placed on a seat base member. The seat cushion is typically made up of foam material. Both leather material and foam material do not allow passage of air through them. Under certain circumstances including long journeys on the vehicle, whenever the rider and the pillion are seated on the seat, heat is being generated between the contact portion of the user's body and the seat cover. The body heat of the rider or the pillion is absorbed by the cover along with the seat cushion and the heated air is not allowed to flow out of the seat cushion. The absorption of body heat persists until the rider or the pillion is seated on the seat assembly and is more significant in regions with hot & humid climate. Additionally, the vehicle parked under the sun is exposed to radiations from the sun and thus, heats up the top surface of the seat assembly. The heated air so trapped by the seat cushion makes the seat assembly very hot and the same is felt as a discomfort by the rider and the pillion. Thus, the heated cushion may create irritation to the user seated on the seat assembly. Further, the user may not prefer to sit on the heated cushion for longer time, pursuing him/her to take frequent brakes by getting down the vehicle. The user typically has to wait for the seat surface to cool down within comfortable level or cool it using water or some users tend to incur extra cost by putting on additional soft fabric cover on the seat which can eliminate excess heating. Fabric based add on covers not only add to cost but are undesirable in case of adverse environmental conditions like rain. Similarly, during low temperature conditions, the seats tend to become cold. Thus, the cold cushion may create irritation to the user seated on the seat assembly.

Particularly, in the tropical countries, there are differences in climate across the country. Since the major mode of transport for such countries are two-wheelers, it is desirable to design a seat assembly which can be comfortable for the rider and the pillion rider, irrespective of the climatic conditions. Common solutions available to address the above said problems include porous seats with forced cooling mechanism. Typically, such porous seats provide forced air to the contact area of the user. The forced air is provided by cooling fans disposed underneath the porous seats. This common solution is usually provided in four wheelers, wherein the air which is cooled or heated by the air conditioner inside the car cabin is used by the fan to forcibly provide it to the user through the porous seats. Such additional cooling system can be charged exorbitantly & practically not preferred for low cost regular commuter vehicles like two & three wheeled vehicles including personal & public transport vehicles. While such solutions can be designed for close envelope seating spaces like cars, these will face new problems if attempted to implement in open structure transport vehicles like two & three wheelers by being exposed to dust, mud, rain, UV, Ozone etc. & thus become unviable.

Further, another solution to address the above explained problem is known in the art. According to another known art, it is preferable to provide a cooling effect at the rider's seating portion. The known solution includes a seat assembly equipped with devices that can regulate the temperature of the seat assembly as per the user comfort. In one of the known constructions of seat assembly, a number of cooling devices, in form of cooling pads, are placed at the user seating zone. These cooling pads have a surface temperature which is lower than that of the ambient, and thus, when a rider is seated over these regions, he/she can experience a sense of cooling at these localized zones. However, since the cooling zone is limited to the cooling pad surface, a localized effect is generated, causing the rider to sense only a localized portion of his/her body being cooled. The temperature gradient is experienced due to uneven distribution of the cooling from the cooling devices. This temperature gradient still causes some discomfort to the user. Further, as a part of incorporation of the cooling pads/cooling devices on the seat assembly, pressure gradient is also experienced by the user seated on the seat assembly. The pressure gradient is again experienced at the localized zones like the temperature gradient. The regions on the seat assembly comprising the cooling pads/cooling devices are harder compared to the other seat cushion area. The contact portion of the user with the cooling pads/cooling devices experiences harder surface compared to other portions of the user in a sitting position. As a result, the contact portion of the user with the cooling pads/cooling devices is subject to high pressure and eventually leads to seating discomfort of the contact portion of the user. The same may not be desirable by the user over a period of time as the discomfort becomes more prominent. Additionally, such pads are vulnerable to tampering or weathering damage & crack from exposure to UV, Ozone etc., while also being undesirable from cost point of view.

Thus, it is desired to provide a mechanism through which the heat generation and coldness in the seat assembly can be superseded and the seat assembly can be uniformly conditioned, to avoid discomfort to the rider.

According to an embodiment of the present invention, the exemplary vehicle has a frame assembly that includes a head tube, a main tube extending downwardly rearward from the head tube, and a pair of railing. A handlebar assembly is connected to a front wheel through one or more front suspension(s). The steering assembly includes a steering shaft rotatably connected to the head tube, one or more front fork(s) connecting a front wheel at a lower end and the steering shaft at a top end, and the handlebar assembly connected to the steering shaft for steering the front wheel. The pair of railings is formed by a left railing and a right railing. An engine is functionally connected to a rear wheel through a transmission system.

Further, the rear wheel is connected to the frame assembly through one or more rear suspension(s). The engine is swingably connected to the frame assembly through a toggle link. A seat assembly is positioned above a storage compartment and is supported by the pair of railing(s). A passenger grip is provided rearwardly of the seat assembly. A utility box, which acts as a storage compartment is positioned below the seat assembly. The utility box is an example for storage compartment. The vehicle is mounted with plurality of body panels mounted to the frame assembly.

In an exemplary vehicle with the embodiment of the present invention, a front fender is covering the front wheel. A seat assembly is connected to the frame assembly at the posterior space of the vehicle. In an exemplary vehicle with the embodiment of the present invention a fuel tank is positioned below the seat assembly. A rear fender is covering the at least a portion of the rear wheel and the rear fender is positioned below the fuel tank. One or more suspension(s) are provided in the rear portion of the vehicle for comfortable ride. The vehicle comprises of plurality of electrical/electronic components including a headlight, a tail light, a battery, an ignition unit, an alternator, a starter motor.

Furthermore, the seat assembly in accordance with an embodiment of the present subject matter comprises of a seat base, which is rigid structure that defines shape of the seat assembly, a foam member disposed above the seat base and seat cover is disposed above the seat foam. The foam member is adapted to sit on the seat base. The foam member is made of non-rigid material and acts as cushion for providing comfortable ride to the user. The seat cover covers, and secures the foam member to the seat base. The seat cover also protects the seat from rain and dust. In addition, the seat cover takes the shape of the foam member. An elastic member is provided at a down portion of the seat base and extending so as to come in contact with an upper circumference of the utility box. Further, the bottom portion of the seat base is provided with one or more elastic cushion(s) for providing additional support to the seat assembly, when the seat is in closed condition. The elastic cushion(s) prevents excess pressure on the seat assembly. A seat hook is provided at the bottom portion and substantially at a rearward portion of the seat base. The seat hook gets locked with latch member provided on the frame assembly.

According to an embodiment of the present invention, the seat assembly comprises of a seat heating-cooling device. In one of the aspect of the present invention the seat heating-cooling device is positioned between the seat cover and the seat foam. Further, in one of the embodiment of the present invention the seat heating-cooling device is positioned in a way that it is partially visible from the seat cover. Furthermore, in one of the embodiment of the present invention the seat heating-cooling device is attached to the seat cover and the foam member. In one of the embodiment of the present invention, the seat heating-cooling device is sandwiched between the seat cover and foam member. As per one of the embodiment of the present invention, the seat heating cooling device is stitched to the seat cover and is supported by the foam member. The seat assembly has a seat start point towards the handlebar assembly and a seat end point towards the pillion rider handle. In one of the embodiments of the present invention the heating-cooling device is positioned in the range of 100mm- 300mm from the seat start point which is typically the frontmost or foremost top edge of the seat when seen in the top & side view of the vehicle. This location is most comfortable since based on the analysis of the pressure distribution in the seat assembly; it is observed that the maximum amount of pressure is received by the seat assembly in the above mentioned range. Since, the rider is already feeling pressure in the above defined range of pressure zone, a small amount of addition in the pressure due to the seat heating-cooling device is not prominent to the rider and therefore, the seat heating-cooling device when positioned in this range, generates maximum comfort level for the rider. It must be noted that if the seat heating-cooling device is placed at a location other than the one in the defined range from the seat foremost top edge, it will act as an additional pressure point for the rider and as such will be uncomfortable. The location of the cooling device thus ensures comfortable ride for the person sitting on the seat. In one of the embodiment of the present invention the seat heating-cooling device is a Peltier device. Generally, the quantity of greatest importance for a heating-cooling device is the coefficient of performance, which is defined as the ratio of the heat extracted from the source to the expenditure of electrical energy. The location of the seat heating-cooling device in the seat assembly, as per one of the embodiments of the present invention is such that it is in close proximity to the seat cover because of which with lesser expenditure of electrical energy the seat heating-cooling device heats or cools the seat assembly faster. Also, since the seat heating-cooling device is closer to the seat assembly surface, the rider feels the effect of the seat heating-cooling device faster and in the most efficient manner. Hence, in one of the embodiment of the present invention the seat heating-cooling device projects at the surface level of the foam to enhance the heating-cooling effect.

In one of the embodiment of the present invention multiple seat heating-cooling device are positioned in columns along the width of the seat assembly. Further, as per one of the embodiment of the present invention multiple seat heating-cooling device are positioned in rows along the width of the seat assembly. Furthermore, in one of the embodiment of the present invention the distance between two consecutive rows of the seat heating-cooling device is kept within the encompassing dimensional range of 100-250mm. This ensures that the seat heating-cooling device falls in the high pressure zones of the rider-pillion interface as analyzed by the test results. This location is most comfortable since as discussed earlier, based on the analysis of the pressure distribution in the seat assembly; it is observed that the maximum amount of pressure is received by the seat assembly in the above mentioned range. Since, the rider is already feeling pressure in the above defined range of pressure zone, a small amount of addition in the pressure due to the seat heating-cooling device is not prominent to the rider and therefore, the seat heating-cooling device when positioned in this range, generates maximum comfort level for the rider. It must be noted that if the seat heating-cooling device is placed a location other than the one in the defined range from the seat start point, it will act as an additional pressure point for the rider and as such will be uncomfortable.

In one of the aspects of the present invention, the cooling device projects at the surface level of the foam, and to enhance the cooling effect, the highly conductive material layer is placed between the cooling device and the seat cover as shown in the figures. In one of the embodiments of the present invention the conductive material layer can be made of gel material. This enables efficient and uniform distribution of heat or cold. The location of the seat heating-cooling device as per the present invention improves the effectiveness of the heating/ cooling and is decided based on the test results and data in order to provide maximum comfort to the rider. As a result of the three dimensional non-axis symmetric contour of a seat profile of a typical saddle type vehicle, the seat pressure distribution pattern at the seat to rider contact interface tends to be a non-linear pattern with higher pressure observed closer thee central portion of the H-point of the rider (H-point is defined by ergonomic standards for a seated human body). This non-liner pressure distribution is used as one of the important basis for deciding the most optimum location for the seat heating cooling device on the seat assembly. This ensures a comfortable condition for rider during long journeys and heats/cools down the seat faster when the top surface of the seat cools down or heats up due to radiation exposure or otherwise.

The aforesaid and other advantages of the present subject matter would be described in greater detail in conjunction with an embodiment of a vehicle with the figures in the following description.

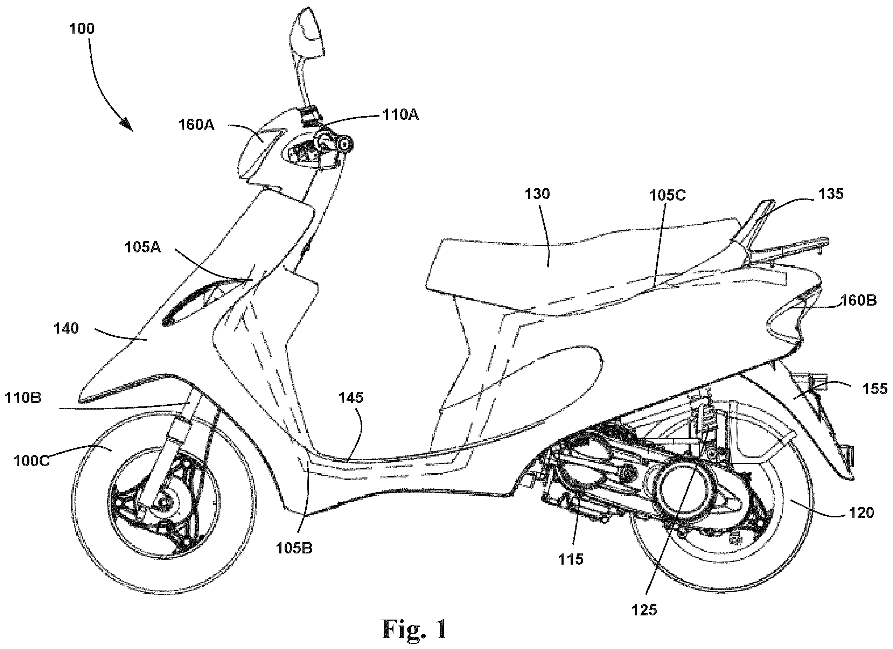

**Fig. 1** illustrates a left side view of an exemplary vehicle **(100),** in accordance with an embodiment of the present subject matter. The vehicle has a frame assembly **(105)** that includes a head tube **(105A),** a main tube **(105B)** extending downwardly rearward from the head tube **(105A),** and a pair of railing **(105C).** A handlebar assembly **(110)** is connected to a front wheel **(115)** through one or more front suspension(s) **(110A).** The steering assembly includes a steering shaft rotatably connected to the head tube **(105A),** one or more front fork(s) **(110B)** connecting a front wheel **(115)** at a lower end and the steering shaft at a top end, and the handlebar assembly **(110)** connected to the steering shaft for steering the front wheel **(115).** The pair of railings **(105C)** is formed by a left railing and a right railing. An engine **(115)** is functionally connected to a rear wheel **(120)** through a transmission system. The transmission system may be a variable transmission type or a fixed gear ratio type.

Further, the rear wheel **(120)** is connected to the frame assembly **(105)** through one or more rear suspension(s) **(125).** The engine **(115)** is swingably connected to the frame assembly **(105)** through a toggle link. A seat assembly **(130)** is positioned above a storage compartment and is supported by the pair of railing(s) **(105C).** A pillion handle **(135)** is provided rearwardly of the seat assembly **(130).** A utility box (not shown), which acts as a storage compartment is positioned below the seat assembly **(130).** The utility box is an example for storage compartment. The vehicle is mounted with plurality of body panels, which are mounted to the frame assembly.

A front fender **(140)** is covering the front wheel **(115).** A floorboard **(145)** is provided at the step-through space. The user can operate the vehicle by resting his feet on the floorboard **(145),** in a sitting position. A seat assembly **(130)** is connected to the frame assembly **(105)** at the posterior space of the step-through space. A fuel tank (not shown) is positioned below the seat assembly **(130).** A rear fender **(150)** is covering the at least a portion of the rear wheel **(120)** and the rear fender **(150)** is positioned below the fuel tank. One or more suspension(s) **(125)** are provided in the rear portion of the vehicle **(100)** for comfortable ride. The vehicle **(100)** comprises of plurality of electrical/electronic components including a headlight **(160A),** a tail light **(160B),** a battery (not shown), an ignition unit (not shown), an alternator (not shown), a starter motor (not shown).

In an embodiment, the seat assembly **(130)** is supported by the utility box that is mounted to the pair of railing(s) **(105C)** and the seat assembly **(130)** has an open condition and a closed condition due to the hinged connection. The seat assembly **(130)** includes a rider seat and a passenger seat that are integrally formed. The pillion handle **(135)** is disposed adjacent to the tandem seat and extending rearwardly of the seat assembly **(130).** In an embodiment, the pillion handle **(135)** extends towards a rear portion of the seat assembly **(130).** As the seat assembly **(130)** is mounted to the pair of railings **(105C),** the seat assembly **(130)** covers at least a portion of the base member (not shown). The base member connects to the pair of railings at a connecting portion. Further, the base member is mounted to one or more cross member(s) disposed between the pair of railings **(105C)** and secured through fasteners. Furthermore, the pillion handle **(135)** may have a handle grip member that is disposed rearwardly of the seat assembly and extending along the vehicle width direction and connecting the pair of passenger grips.

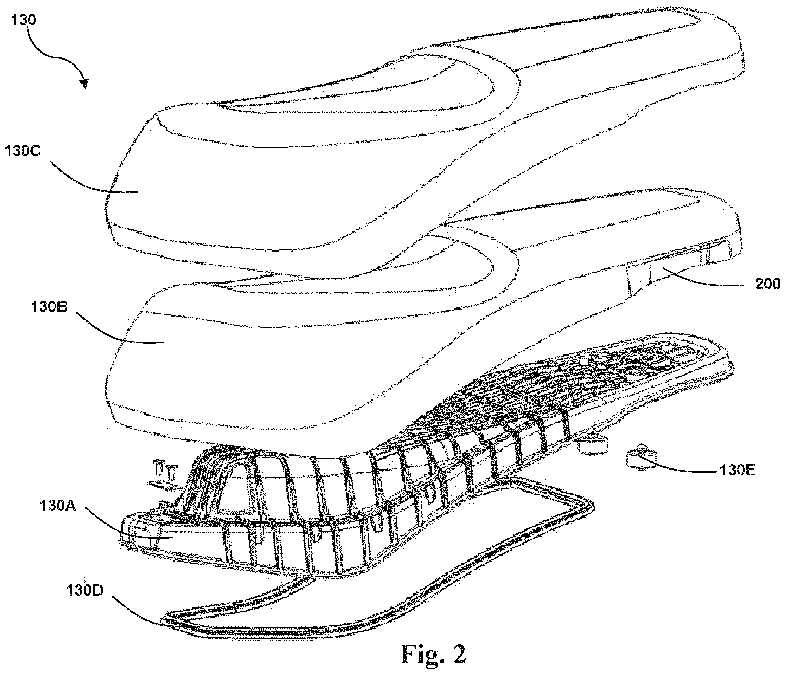

**Fig. 2** depicts an exploded view of the seat assembly, in accordance with an embodiment of the present subject matter. The seat assembly **(130)** comprises of a seat base **(130A),** which is rigid structure that defines shape of the seat assembly **(130).** A foam member **(130B)** is disposed above the seat base **(130A)** and the foam member **(130B)** is adapted to sit on the seat base **(130A).** The foam member **(130B)** is made of non-rigid material and acts as cushion for providing comfortable ride to the user. A seat cover **(130C)** is disposed above the foam member **(130B),** wherein the seat cover **(130C)** covers, and secures the foam member **(130B)** to the seat base **(130A).** The seat cover **(130C)** protects the seat from rain and dust. Also, the seat cover **(130C)** takes the shape of the foam member **(130B).** An elastic member **(130D)** is provided at a down portion of the seat base **(130A)** and extending so as to come in contact with an upper circumference of the utility box (not shown). Further, the bottom portion of the seat base **(130A)** is provided with one or more elastic cushion(s) **(130E)** for providing additional support to the seat assembly **(130),** when the seat is in closed condition. The elastic cushions(s) **(130E)** prevent excess pressure on the seat assembly **(130).** A seat hook (not shown) is provided at the bottom portion and substantially at a rearward portion of the seat base **(130A).** The seat hook gets locked with latch member provided on the frame assembly. Further, a seat recess **(200)** is provided on a surface(s) disposed at lateral ends of the seat foam member that is adjacent to the connecting portion(s).

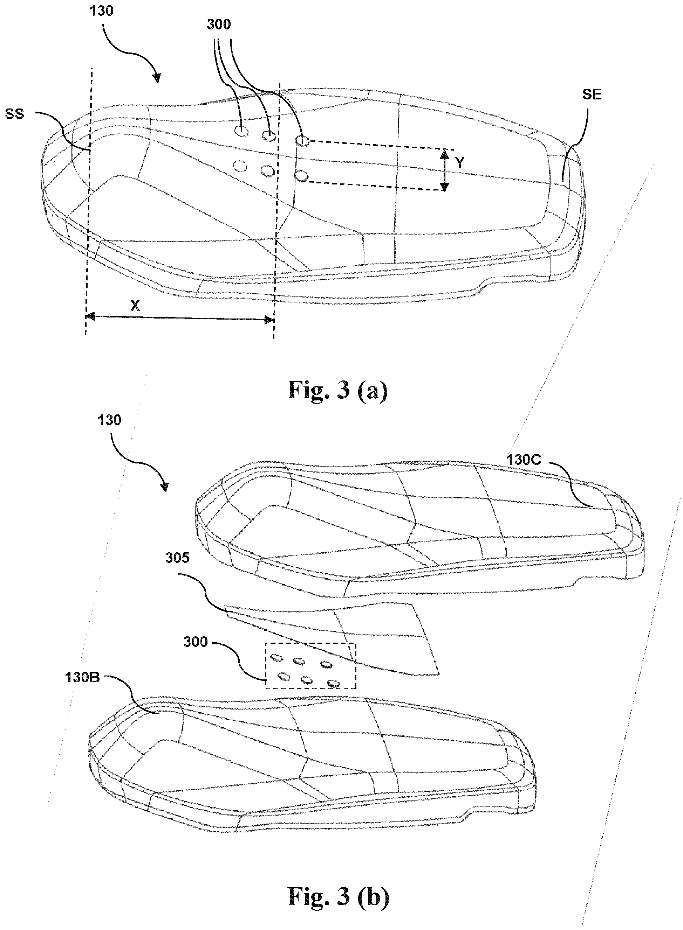

**Fig. 3(a)** represents a perspective view of the seat assembly **(130)** in accordance with an embodiment of the present subject matter. According to an embodiment of the present invention, the seat assembly **(130)** comprises of a seat heating-cooling device **(300).** In one of the aspect of the present invention the seat heating-cooling device **(300)** is positioned between the seat cover **(130C)** and the foam member **(130B).** Further, in one of the embodiment of the present invention the seat heating-cooling device **(300)** is positioned in a way that it is partially visible from the seat cover **(130C).** Furthermore, in one of the embodiment of the present invention the seat heating-cooling device **(300)** is attached to the seat cover **(130C)** and the foam member **(130B).** In one of the embodiment of the present invention, the seat heating-cooling device **(300)** is sandwiched between the seat cover **(130C)** and foam member **(130B).** As per one of the embodiment of the present invention, the seat heating-cooling device **(300)** is stitched to the seat cover **(130C)** and is supported by the foam member **(130B).** In one of the embodiment of the present invention the seat heating cooling device **(300)** is attached to the foam member **(130B)** and the seat cover **(130C)** via suitable attaching means such as stitching, adhesive material etc. The seat assembly **(130)** has a seat start point **SS** towards the handlebar assembly **(110)** and a seat end point **SE** towards the pillion handle **(135).** In one of the embodiments of the present invention the seat heating-cooling device **(300)** is positioned at a distance X from the seat start point **SS.** Further, as per one of the embodiment of the present invention the distance **X** is in the range of 100mm- 300mm from the seat start point **SS.** This location is most comfortable since based on the analysis of the pressure distribution in the seat assembly **(130),** it is observed that the maximum amount of pressure is received by the seat assembly **(130)** in the above mentioned range. Since, the rider is already feeling contact pressure in the above defined range of pressure zone owing to being in seated contact with the seat interface, a small amount of addition in the pressure due to the seat heating-cooling device **(300)** does not have any prominent adverse impact to the rider and therefore, the seat heating-cooling device **(300)** when positioned in this range, generates maximum comfort level for the rider. It must be noted that if the seat heating-cooling device **(300)** is placed a location other than the one in the defined range from the seat start point, it will act as an additional pressure point for the rider and as such will be uncomfortable. The location of the seat heating-cooling device **(300)** thus ensures comfortable ride for the person sitting on the seat assembly **(130).**

In one of the embodiment of the present invention the seat heating-cooling device **(300)** is a Peltier device. Generally, the quantity of greatest importance for a heating-cooling device is the coefficient of performance, which is defined as the ratio of the heat extracted from the source to the expenditure of electrical energy. The location of the seat heating-cooling device **(300)** in the seat assembly **(130),** as per one of the embodiments of the present invention is such that it is in close proximity to the seat cover **(130C)** because of which with lesser expenditure of electrical energy the seat heating-cooling device **(300)** heats or cools the seat assembly **(130)** faster. Also, since the seat heating-cooling device is closer to the seat assembly **(130)** surface, the rider feels the effect of the seat heating-cooling device **(300)** faster and in the most efficient manner. Hence, in one of the embodiment of the present invention the seat heating-cooling device **(300)** projects from the surface level of the foam member **(130B)** and on the seat cover **(130C)** to enhance the heating-cooling effect.

In one of the embodiment of the present invention multiple seat heating-cooling device **(300)** are positioned in columns along the width of the seat assembly as shown in **Fig. 3(a)****.** Further, as per one of the embodiment of the present invention multiple seat heating-cooling device **(300)** are positioned in rows along the width of the seat assembly **(130).** Furthermore, in one of the embodiment of the present invention the distance between two consecutive rows of the seat heating-cooling device **(300)** is at a distance **Y** along the width of the vehicle. Further, as per one of the embodiment of the present invention the distance **Y** is in the range of 100-250mm. This ensures that the seat heating-cooling device **(300)** is in the high pressure seat rider contact interface zones as confirmed by test results. This location is most comfortable since as discussed earlier, based on the analysis of the pressure distribution in the seat assembly **(130),** it is observed that the maximum amount of pressure is received by the seat assembly **(130)** in the above mentioned range. Since, the rider is already experiencing seat interface contact pressure in the above defined range of pressure zone, a small amount of addition in the pressure due to the seat heating-cooling device **(300)** is not prominent to the rider and therefore, the seat heating-cooling device **(300)** when positioned in this range, generates maximum comfort level for the rider. It must be noted that if the seat heating-cooling device **(300)** is placed a location other than the one in the defined range from the seat start point SS, it will act as an additional pressure point for the rider and as such will be uncomfortable & therefore not desirable.

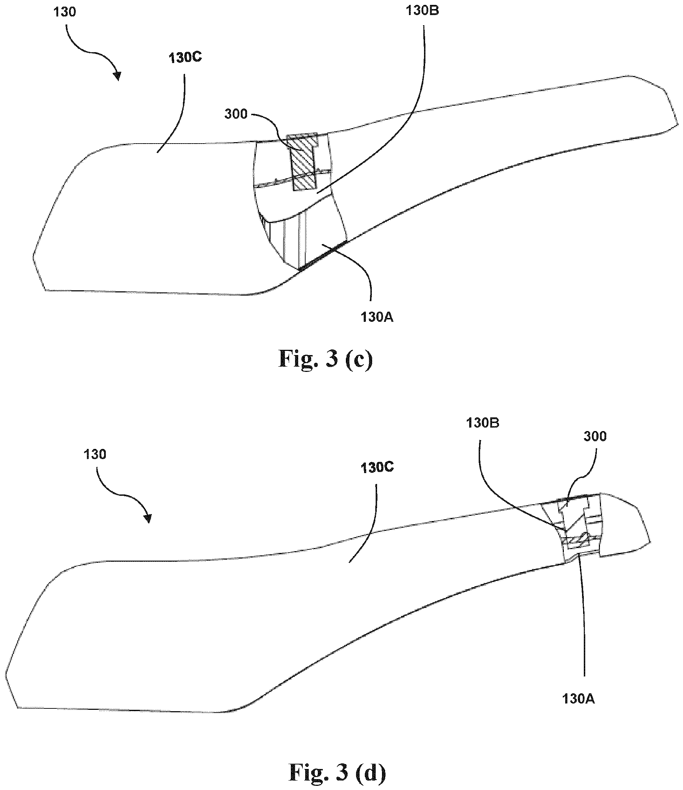

**Fig. 3(b)** shows the exploded view of the seat assembly **(130)** with an embodiment of the present invention. In one of the aspects of the present invention, the seat heating-cooling device **(300)** projects from the surface level of the foam member **(130B),** and to enhance the cooling effect, the highly conductive material layer **(305)** is placed between the seat heating-cooling device **(300)** and the seat cover **(130C)** as shown in **Fig. 3(b)****.** In one of the embodiments of the present invention the conductive material layer **(305)** can be made of gel material. This enables efficient and uniform distribution of heat or cold over the seat assembly **(130).** The location of the seat heating-cooling device **(300)** as per the present invention improves the effectiveness of the heating/ cooling. The non-liner pressure distribution is of the critical basis for deciding the most optimum location for the seat heating cooling device **(300)** on the seat assembly **(130).** This ensures a comfortable condition for rider during long journeys and heats/cools down the seat faster when the top surface of the seat assembly **(130)** cools down or heats up due to radiation exposure or otherwise. **Fig. 3(c)** shows the left side view of the seat assembly **(130)** with a cut out section showing the internal view of the seat assembly **(130)** with the seat heating-cooling device **(300)** attached to the seat cover **(130C)** and the foam member **(130B).** In one of the embodiments of the present invention the seat heating-cooling device **(300)** is partially visible from the seat cover **(130C)** from the top as illustrated in the **Fig. 3(c)****.** As per an aspect, the device **(300)** at least partially projects outside the top surface of the top surface of the seat assembly. **Fig. 3(d)** shows the left side view of the seat assembly **(130)** with a cut out section showing the internal view of the seat assembly **(130)** with the seat heating-cooling device **(300)** attached to the seat cover **(130C)** and the foam member **(130B).** In one of the embodiment the seat heating-cooling device **(300)** is positioned towards the rear seat end side **SE** of the seat assembly **(130)** for providing heat/ cold to the pillion rider.

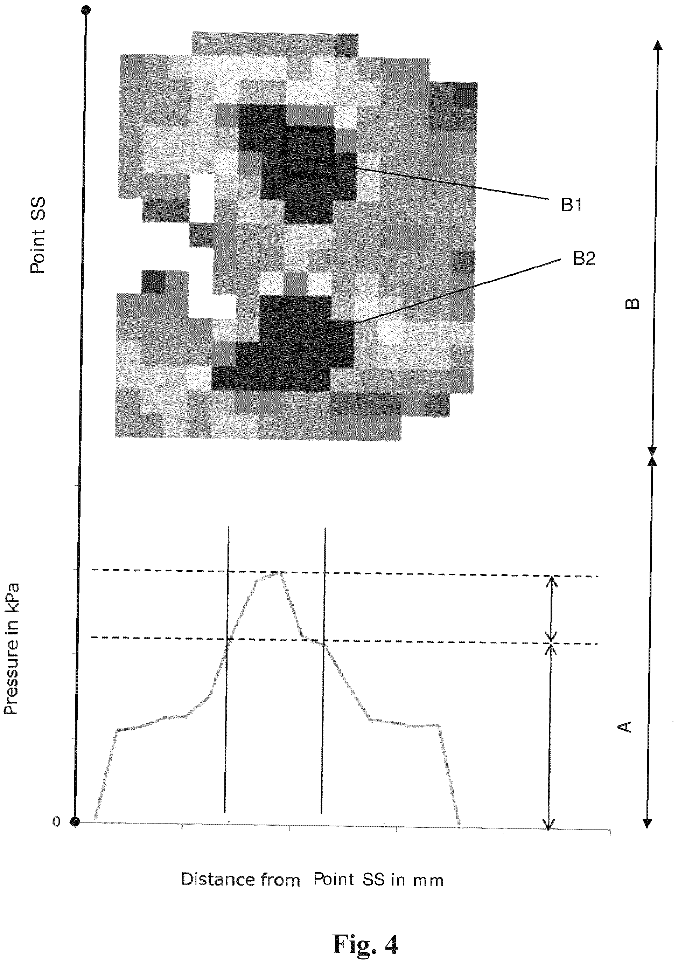

**Fig. 4** shows the graphical representation of three-dimensional non-linear seat pressure distribution along the length of the seat assembly **(130).** The distance on the plot along the horizontal axis is taken from the point **SS** i.e. the seat start point **SS** located on the seat assembly **(130)** towards the handlebar assembly **(110)** of the exemplary vehicle **(100).** The zone **A** of **Fig. 4** is the line graph of the pressure distribution and zone **B** is the pressure mat representation. The darker areas **(B1, B2)** of the pressure mat representation in zone **B** shows the maximum pressure zones on the seat assembly **(130)** from the seat start point **SS** corresponding to the line graph high pressure zone in the range of 100-300 mm. The pressure is measured in the unit of kPa as shown in the graph. In one of the embodiments of the present invention the seat heating-cooling device **(300)** is positioned in the above mentioned range of high pressure zone from the seat start point **SS** on the seat assembly **(130).** It must be noted that at this high pressure zone the contact area of the rider with respect to the seat heating-cooling device **(300)** is maximum.

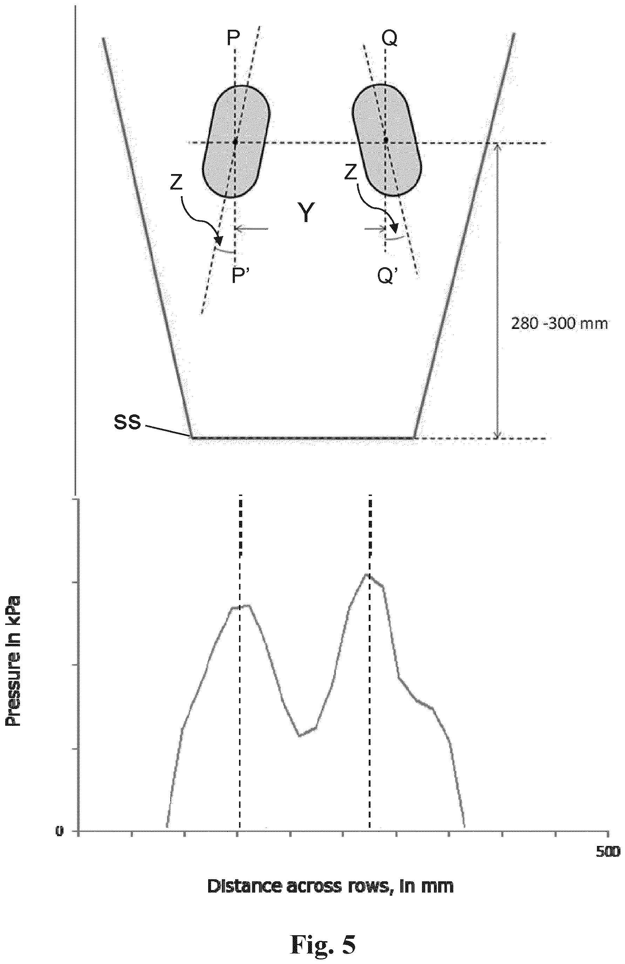

**Fig. 5** shows the graphical representation of seat pressure distribution along the width of the seat assembly **(130).** The upper portion of the graph shows the position of the seat heating-cooling device **(300)** on the seat assembly **(130).** The distance Y as shown in the upper portion is the distance between two seat heating-cooling device **(300)** positioned on the seat assembly **(130).** This distance is corresponding to the two high pressure peak points as shown in the lower portion of the graph representing the pressure distribution via line graph. Furthermore, in one of the embodiment of the present invention the two adjacent seat heating-cooling device can be placed at an angle Z from the straight axis **PP'** and **QQ'** respectively as shown in the upper portion of the graph where this angle **Z** is in the range of 10-20 degrees from the axis **PP'** and **QQ'** respectively. This angle further enhances the comfort level for the riders on the seat assembly **(130).**

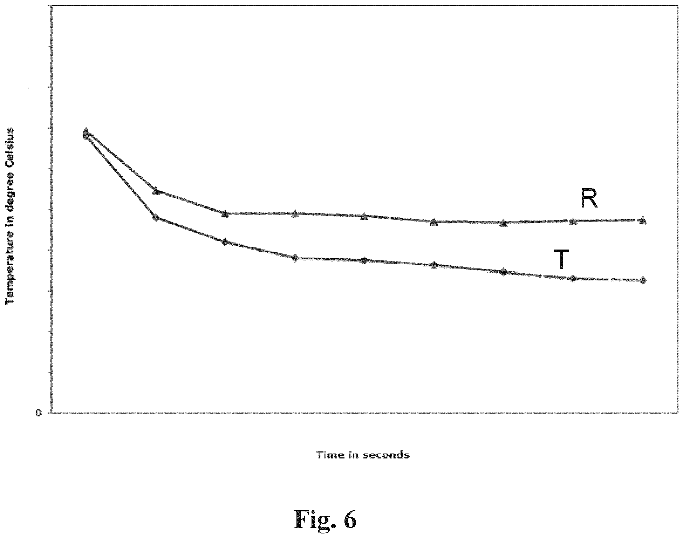

**Fig. 6** shows the graphical representation of temperature over the period of time with reference to the seat heating-cooling device **(300)** position in the seat assembly **(130)** to that in the known art. In some of the known arts the cooling/ heating devices are placed at the bottom of the seat assembly away from the seat cover and below the foam member. These assemblies of the cooling/ heating device have to implement a conductive material in order to transfer the cold or heat from the device to the seat cover where the rider is in contact with the seat assembly. In the positions as discussed in the known prior arts, the conversion ratio of electrical energy to heat or cold is not that efficient since a lot of generated energy is wasted during the transfer. In one of the embodiment of the present invention the seat heating-cooling device is positioned near the surface of the seat assembly **(130).** Further, as per one of the embodiment of the present invention the seat heating-cooling device **(300)** is positioned in a way that it is at least partially visible through the seat cover **(130C).** This assembly of the seat heating-cooling device **(300)** near the seat cover **(130C)** brings the seat heating-cooling device **(300)** in closer proximity to the surface of the seat assembly **(130)** and in substantial contact to the fabric worn by the rider. This assembly therefore produces more efficient cooling/ heating effect as the seat heating-cooling device **(300)** is itself in contact with the seat cover **(130)** and the rider. Also, in the assembly as discussed above the seat heating-cooling device **(300)** is located close to the seat cover **(130),** requiring no transfer mechanism and thus, prevents the wastage of the electrical energy. As can be seen from the graph shown in **Fig. 6****,** with the implementation of the present invention the seat assembly **(130)** is able to achieve lower temperature ranges within the same period of time. Similar results can be achieved for higher temperature ranges as well.

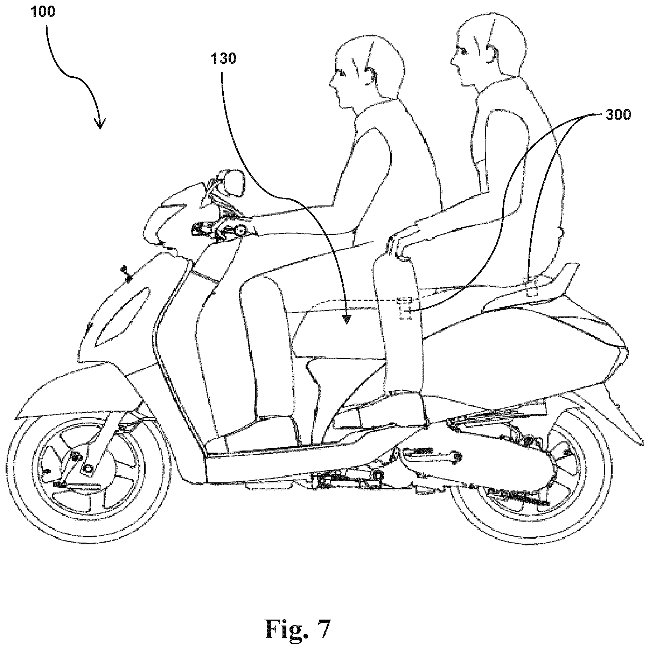

**Fig.7** shows the left side view of the vehicle **(100)** in accordance with an embodiment of the present subject matter. The riders are shown in the sitting position on the vehicle **(100)** with respect to the location of the seat heating-cooling device **(300).** Accordingly, as can be seen in **Fig. 7** the high pressure zone as discussed above is the area on the seat assembly **(130)** where the rider is inserting maximum pressure and is in maximum contact with the seat cover **(130C).** Therefore, with analysis as well as test results, the specific locus of the area configured with the device **(300)** as per the present invention is the most optimum location for positioning the seat heating-cooling device **(300)** overcoming all the cited problems & other problems of known art. In one of the embodiments of the present invention, utilizing similar test based locus optimization & calibration technique as well as data the optimum location is determined & the seat heating-cooling device **(300)** attached to the seat assembly **(130)** within a periphery or locus encompassed by the specific pressure non-linear pattern zone for a pillion rider. As per alternate embodiments, the seat assembly may have integrally molded seat foam cum cover member as a single seat member with the device **(300)** calibrated & configured at the optimal locus to achieve best comfort for the rider or the pillion. In an alternate embodiment, the entire seat is a single entity with no separate seat base, seat foam & seat cover.

Thus, the present subject matter provides a seat assembly which can be easily implemented in the existing structure of the vehicle and can be implemented on different vehicle models. Further, the present subject matter provides a seat assembly comprising a seat heating-cooling device. Furthermore, in one of the aspect of the present invention the seat heating-cooling device is positioned between the seat cover and the foam member. Further, in one of the embodiment of the present invention the seat heating-cooling device is positioned in a way that it is partially visible from the seat cover. Also, in one of the embodiment of the present invention, the seat heating-cooling device is sandwiched between the seat cover and foam member. The present subject matter thus, provides a heating-cooling device calibrated & positioned at a distance X in the range of 100mm- 300mm from the seat start point **SS** from the seat start point **SS.** It is observed that the maximum amount of pressure is received by the seat assembly in the above mentioned range. Since, the rider is already experiencing nominal pressure in the above defined range of pressure zone, a small amount of addition in the pressure due to the seat heating-cooling device is not prominent to the rider and therefore, the seat heating-cooling device when configured in this specific range, delivers maximum comfort level for the rider. Also, the location of the seat assembly as discussed in the present subject matter provides maximum cooling efficiency and minimum wastage of electrical energy.

**List of Reference Signs**

| | | | |
|---|---|---|---|
| 100 | Vehicle | 160B | Tail light |
| 105 | Frame Assembly | 200 | Seat recess |
| 105A | Head Tube | 300 | Seat heating-cooling device |
| 105B | Main tube | 305 | Conductive material layers |
| 105C | Pair of railing | SS | Seat start side |
| 110 | Handlebar Assembly | SE | Seat end side |
| 110A | Front Suspension | | |
| 110B | Front Fork | | |
| 115 | Front wheel | | |
| 120 | Rear wheel | | |
| 125 | Rear suspension | | |
| 130 | Seat assembly | | |
| 130A | Seat base | | |
| 130B | Foam member | | |
| 130C | Seat cover | | |
| 130D | Elastic member | | |
| 130E | Elastic cushion | | |
| 135 | Pillion handle | | |
| 140 | Front fender | | |
| 145 | Floor board | | |
| 150 | Rear Fender | | |
| 160A | Headlight | | |

## Claims

1. A vehicle **(100)** comprising:
a frame assembly **(105);** and
a seat assembly **(130)** connected to said frame assembly **(105),** said seat assembly **(130)** includes a seat base **(130A),** a foam member **(130B),** a seat cover **(130C),** an elastic member **(130D),** at least one elastic cushion **(130E),** a seat start point SS, a seat heating-cooling device **(300)** attached to said seat cover **(130C)** and said foam member **(130B)** at a pre-determined distance **X** from said seat start point **SS.**

2. The vehicle **(100)** as claimed in claim 1, wherein said seat heating-cooling device **(300)** is at least partially visible through said seat cover **(130C).**

3. The vehicle **(100)** as claimed in claim 1, wherein said seat heating-cooling device **(300)** is attached to said foam member **(130B)** and said seat cover **(130C)** via suitable attaching means.

4. The vehicle **(100)** as claimed in claim 1, wherein said seat assembly **(130)** has a seat start point **SS** towards the handlebar assembly **(110)** and a seat end point **SE** towards the pillion handle **(135)** and said seat heating-cooling device **(300)** is positioned at a pre-determined longitudinal distance **X** in the range of 100mm- 300mm, from the seat start point **SS.**

5. The vehicle **(100)** as claimed in claim 1, wherein said seat assembly **(130)** includes multiple seat heating-cooling device **(300)** positioned in matrix wise manner along the length & width of said seat assembly **(130).**

6. The vehicle **(100)** as claimed in claim 1, wherein said seat assembly **(130)** includes multiple seat heating-cooling device **(300)** positioned in rows along the width of said seat assembly **(130)** the two consecutive rows of said seat heating-cooling device **(300)** matrix are at a pre-determined distance **Y** in the range of 100-250 mm along the width of said vehicle **(100).**

7. The vehicle **(100)** as claimed in claim 1, wherein said seat heating-cooling device **(300)** projects at least partially from the surface level of said foam member **(130B)** and a highly conductive material layer **(305)** is placed between said seat heating-cooling device **(300)** and said seat cover **(130C).**

8. The vehicle **(100)** as claimed in claim 1, wherein said seat heating-cooling device **(300)** are placed at an angle **Z** in the range of 10-20 degrees from a straight axis **PP'.**

9. The vehicle **(100)** as claimed in claim 1, wherein said seat assembly **(130)** has an integrally molded seat foam member **(130B)** cum seat cover **(130c)** as a single seat member having said seat heating-cooling device **(300).**

10. The vehicle **(100)** as claimed in claim 1, wherein said seat assembly **(130)** is a single entity having no separate said seat base **(130A),** said foam member **(130B)** and said seat cover **(130C).**
